(19)

**Europäisches Patentamt**
**European Patent Office**
**Office européen des brevets**

(11) **EP 2 309 764 A1**

(12) **EUROPEAN PATENT APPLICATION**

(43) Date of publication:
**13.04.2011 Bulletin 2011/15**

(51) Int Cl.:
***H04N 13/00*** *(2006.01)*

(21) Application number: **09170382.7**

(22) Date of filing: **16.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Koninklijke Philips Electronics N.V.**
**5621 BA Eindhoven (NL)**

(72) Inventor: **The designation of the inventor has not yet been filed**

(74) Representative: **Damen, Daniel Martijn**
**Philips Intellectual Property & Standards**
**P.O. Box 220**
**5600 AE Eindhoven (NL)**

(54) **3D screen size compensation**

(57) A device converts three dimensional [3D] image data arranged for a source spatial viewing configuration to a 3D display signal (56) for a 3D display in a target spatial viewing configuration. 3D display metadata has target width data indicative of a target width $W_t$ of the 3D display in the target spatial viewing configuration. A processor (52,18) changes the mutual horizontal position of images L and R by an offset O to compensate differences between the source spatial viewing configuration and the target spatial viewing configuration. The processor (52) retrieves source offset data provided for the 3D image data for calculating the offset O, and determines the offset O in dependence of the source offset data. Advantageously the 3D perception for the viewer is automatically adapted based on the source offset data as retrieved to be substantially equal irrespective of the screen size.

FIG. 1

**Description**

FIELD OF THE INVENTION

The invention relates to a device for processing of three dimensional [3D] image data for display on a 3D display for a viewer in a target spatial viewing configuration, the 3D image data representing at least a left image L to be rendered for the left eye and a right image R to be rendered for the right eye in a source spatial viewing configuration, the device comprising a processor for processing the 3D image data to generate a 3D display signal for the 3D display by changing the mutual horizontal position of images L and R by an offset O to compensate differences between the source spatial viewing configuration and the target spatial viewing configuration.

The invention further relates to a method of processing of the 3D image data, the method comprising the step of processing the 3D image data to generate a 3D display signal for the 3D display by changing the mutual horizontal position of images L and R by an offset O to compensate differences between the source spatial viewing configuration and the target spatial viewing configuration.

The invention further relates to a signal and record carrier for transferring the 3D image data for display on a 3D display for a viewer.

The invention relates to the field of providing 3D image data via a medium like an optical disc or internet, processing the 3D image data for display on a 3D display, and for transferring, via a high-speed digital interface, e.g. HDMI, a display signal carrying the 3D image data, e.g. 3D video, between the 3D image device and a 3D display device.

BACKGROUND OF THE INVENTION

Devices for sourcing 2D video data are known, for example video players like DVD players or set top boxes which provide digital video signals. The device is to be coupled to a display device like a TV set or monitor. Image data is transferred by a display signal from the device via a suitable interface, preferably a high-speed digital interface like HDMI. Currently 3D enhanced devices for sourcing and processing three dimensional (3D) image data are being proposed. Similarly devices for displaying 3D image data are being proposed. For transferring the 3D video signals from the source device to the display device new high data rate digital interface standards are being developed, e.g. based on and compatible with the existing HDMI standard.

The article "Reconstruction of Correct 3-D perception on Screens viewed at different distances; by R. Kutka; IEEE transactions on Communications, Vol.42, No.1, January 1994" describes perception of depth of a viewer watching a 3D display providing a left image L to be perceived by a left eye and a right image R to be perceived by a right eye of the viewer. The effect of different screen sizes is discussed. It is proposed to apply a size dependent shift between the stereo images. The shift is calculated in dependence of the size ratio of the different screens and proven to be sufficient to reconstruct the correct 3-D geometry.

SUMMARY OF THE INVENTION

Although the article by Kutka describes a formula for compensating different screen sizes, and the article states that a size dependent shift between the stereo images is necessary and sufficient to reconstruct the 3D geometry, it concludes that the shift has to be adjusted only once when a television screen is built or installed and must then be kept constant all times.

It is an object of the invention to provide a 3D image via a 3D display signal that is perceived by a viewer to have a 3D effect that is substantially as intended by the originator at the source of the 3D image data.

For this purpose, according to a first aspect of the invention, the device as described in the opening paragraph comprises display metadata means for providing 3D display metadata comprising target width data indicative of a target width $W_t$ of the 3D data as displayed in the target spatial viewing configuration, input means for retrieving source offset data indicative of a disparity between the L image and the R image provided for the 3D image data based on a source width $W_s$ and a source eye distance $E_s$ of a viewer in the source spatial viewing configuration, the processor being further arranged for determining the offset O in dependence of the source offset data.

For this purpose, according to a second aspect of the invention, a method comprises the steps of providing 3D display metadata comprising target width data indicative of a target width $W_t$ of the 3D data as displayed in the target spatial viewing configuration, and retrieving source offset data indicative of a disparity between the L image and the R image provided for the 3D image data based on a source width $W_s$ and a source eye distance $E_s$ of a viewer in the source spatial viewing configuration, and determining the offset O in dependence of the source offset data.

For this purpose, a 3D image signal comprises the 3D image data representing at least a left image L to be rendered for the left eye and a right image R to be rendered for the right eye in a source spatial viewing configuration, and source offset data indicative of a disparity between the L image and the R image provided for the 3D image data based on a source width $W_s$ and a source eye distance $E_s$ of a viewer in the source spatial viewing configuration for determining an offset O to compensate differences between the source spatial viewing configuration and the target spatial viewing configuration having a target width $W_t$ of the 3D data as displayed by changing the mutual horizontal position of images L and R by the offset O.

The measures have the effect that the offset between L and R images is adjusted so that objects appear to have a same depth position irrespective of the size of the actual display and as intended in the source spatial viewing configuration. Thereto the source system provides the source offset data indicative of a disparity between the L image and the R image based on a source width $W_s$ and a source eye distance $E_s$ of a viewer in the source spatial viewing configuration. The source offset data is retrieved by the device and applied to calculate an actual value for the offset O. The source offset data indicates the disparity that is present in the source 3D image data or that is to be applied on the source image data when displayed at a display of a known size. The display metadata means provide 3D display metadata indicative of a target width $W_t$ of the 3D data as displayed in the target spatial viewing configuration. The actual offset O is based on the retrieved source offset data and the target 3D display metadata, in particular the target width $W_t$. The actual offset can be easily calculated based on the target width and the retrieved source offset data, e.g. using an eye distance E and a source offset $O_s$ by $O = E/W_t - O_s$. Advantageously the actual offset is automatically adapted to the width of the 3D image data as displayed for the target viewer to provide the 3D effect as intended by the source, which adaptation is under the control of the source by providing said source offset data.

Providing the source offset data in the 3D image signal has the advantage that the source offset data is directly coupled to the source 3D image data. The actual source offset data is retrieved by the input unit and known to a receiving device, and is used for the calculation of the offset as described above. Retrieving the source offset data may comprise retrieving the source offset data from the 3D image signal, from a separate data signal, from a memory, and/or may invoke accessing a database via a network. The signal may be embodied by a physical pattern of marks provided on a storage medium like an optical record carrier.

It is noted that the source system may provide the 3D image data for a source spatial viewing configuration, i.e. a reference configuration for which the image data is authored and is intended to be used for display, e.g. a movie theatre. The device is equipped to process the 3D image data to adapt the display signal to a target spatial viewing configuration, e.g. a home TV set. However, the 3D image data may also be provided for a standard TV set, e.g. 100 cm, and be displayed at home on a home theatre screen of 250 cm. To accommodate the difference in size the device processes the source data to adapt to the target width data indicative of a target width $W_t$ of the 3D display in the target spatial viewing configuration having a target eye distance $E_t$ of a target viewer. The target eye distance $E_t$ may fixed to a standard value, or may be measured or entered for different viewers.

In an embodiment of device the input means are arranged for retrieving source offset data comprising at least one of

- at least a first target offset value $O_{t1}$ for a first target width $W_{t1}$ of a target 3D display, the processor (52) being arranged for determining the offset O in dependence on a correspondence of the first target width $W_{t1}$ and the target width $W_t$ ;
- a source offset distance ratio value $O_{sd}$ based on

$$O_{sd} = E_s / W_s \ ;$$

- a source offset pixel value $O_{sp}$ for the 3D image data having a source horizontal resolution in pixels $HP_s$ based on

$$O_{sp} = HP_s * E_s / W_s ;$$

- source viewing distance data (42) indicative of a reference distance of a viewer to the display in the source spatial viewing configuration;
- border offset data indicative of a spread of the offset O over the position of left image L and the position of right image R; and the processor (52) is arranged for determining the offset O in dependence on the respective source offset data. The device is arranged to apply the respective offset data in one of the following ways.

Based on a correspondence of the first target width $W_{t1}$ and the actual target width $W_t$ the receiving device might directly apply the target offset value as provided. Also a few values for different target widths may be included in the signal. Further an interpolation or extrapolation may be applied for compensating differences between the supplied target width(s) and the actual target width. It is noted that linear interpolation correctly provides intermediate values.

Based on the provided source offset distance value or pixel value the actual offset is determined. The calculation might be performed in the physical size (e.g. in meters or inches) and subsequently be converted into pixels, or directly in pixels. Advantageously the calculation of the offset is simplified.

Based on the source viewing distance the target offset can be compensated for an actual target viewing distance. The disparity is affected by the viewing distance for objects closer than infinity. When the target viewing distance does not proportionally match the source viewing distance depth distortions occur. Advantageously the distortions can be reduced based on the source viewing distance.

Based on the border offset the target offset is spread over the left and right images. Applying the spread as provided for the 3D image data is particularly relevant if shifted pixels are to be cropped at the borders.

In an embodiment of the device the processor (52) is arranged for at least one of

- determining the offset O in dependence on a correspondence of the first target width $W_{t1}$ and the target width $W_t$ ;
- determining the offset as a target distance ratio $O_{td}$ for a target eye distance $E_t$ of a target viewer and the target width $W_t$ based on

$$O_{td} = E_t / W_t - O_{sd} \;\; ;$$

- determining the offset in pixels Op for a target eye distance $E_t$ of a target viewer and the target width $W_t$ for the 3D display signal having a target horizontal resolution in pixels $HP_t$ based on

$$O_p = HP_t * E_t / W_t - O_{sp} \;\; ;$$

- determining the offset O in dependence of a combination of the source viewing distance data and at least one of the first target offset value, the source offset distance value, and the source offset pixel value;
- determining a spread of the offset O over the position of left image L and the position of right image R in dependence of the border offset data.

The device is arranged to determine the actual offset using based on the relation as defined and the provided source offset data. Advantageously the calculation of the offset is efficient. It is noted that the parameter eye distance $(E_t)$ may invoke the device to provide or acquire a specific eye distance value. Alternatively the calculation may be based on a general accepted average value for the eye distance such as 65 mm.

In an embodiment of the device the source offset data comprises, for a first target width $W_{t1}$, at least a first target offset value $O_{t1}$ for a first viewing distance and at least a second target offset value $O_{t112}$ for a second viewing distance, and the processor is arranged for determining the offset O in dependence on a correspondence of the first target width $W_{t1}$ and the target width $W_t$ and a correspondence of an actual viewing distance and the first or second viewing distance. For example, the actual offset may be selected in dependence of both the actual target width $W_t$ and the actual viewing distance based on a two-dimensional table of target offset values and viewing distances.

It is noted that the actual 3D effect on the target display is substantially equal when the viewer distance is proportionally equal, i.e. the intended source viewing distance in the reference configuration multiplied by the ratio of screen sizes. However, the actual viewing distance may be different. The 3D effect can no longer be equal. Advantageously, by providing different offset values for different viewing distances, the actual offset value can be determined based on the actual viewing distance.

In an embodiment the device comprises viewer metadata means for providing viewer metadata defining spatial viewing parameters of the viewer with respect to the 3D display, the spatial viewing parameters including at least one of

- a target eye distance $E_t$ ;
- a target viewing distance $D_t$ of the viewer to the 3D display;

and the processor is arranged for determining the offset in dependence of at least one of the target eye distance $E_t$ and the target viewing distance $D_t$.

The viewer metadata means are arranged for determining the viewing parameters of the user with respect to the 3D display. The viewer eye distance $E_t$ may be entered, or measured or a viewer category may be set, e.g. a child mode or an age (setting a smaller eye distance than for adults). Also the viewing distance may be entered or measured, or may be retrieved from other parameter values, e.g. surround sound settings for a distance from the center speaker which usually is close to the display. This has the advantage that the actual viewer eye distance is used for calculating the offset.

In an embodiment of the device the processor is arranged for determining a compensated offset $O_{cv}$ for a target viewing distance $D_t$ of the viewer to the 3D display, the source spatial viewing configuration having a source viewing distance $D_s$, based on

$$O_{cv} = O / ( 1 + D_t / D_s - W_t / W_s ) .$$

The compensated offset is determined for the target spatial viewing configuration where the ratio of viewing distance $D_t$ and the source viewing distance $D_s$ does not match proportionally with the screen size ratio $W_t / W_s$.

Usually the viewer distance and screen size at home does not match a movie theatre; typically he will be further away. The offset correction as mentioned above will not be able to make the view experience exactly the same as on the big screen. The inventors have found that the compensated offset provides an improved viewing experience, in particular for objects having a depth close to the source screen. Advantageously the compensated offset will compensate for a large amount of objects in common video material, as the author usually keeps the depths of objects in focus near the screen.

An embodiment of device comprises input means for retrieving the source 3D image data from a record carrier. In a further embodiment, the source 3D image data comprises the source offset data and the processor is arranged for retrieving the source offset data from the source 3D image data. This has the advantage that the source 3D image data, which is distributed via a medium such as an optical record carrier like Blu-Ray Disc (BD), is retrieved from the medium by the input unit. Moreover, the source offset data may advantageously be retrieved from the source 3D image data.

In an embodiment of device the processor is arranged for accommodating said mutually changed horizontal positions by applying to the 3D display signal intended for a display area at least one of the following

- cropping image data exceeding the display area due to said changing;
- adding pixels to the left and/or right boundary of the 3D display signal for extending the display area;
- scaling the mutually changed L and R images to fit within the display area.

The device now accommodates one of said processing options to modify the 3D display signal after applying the offset. Advantageously cropping any pixels exceeding the current number of pixels in horizontal direction keeps the signal within the standard display signal resolution. Advantageously adding pixels exceeding the current number of pixels in horizontal direction extends the standard display signal resolution but avoids missing some pixels for one eye at the left and right edges of the display area. Finally, advantageously, scaling the images to map any pixels exceeding the current number of pixels in horizontal direction on the available horizontal line keeps the signal within the standard display signal resolution and avoids missing some pixels for one eye at the left and right edges of the display area.

Further preferred embodiments of the device and method according to the invention are given in the appended claims, disclosure of which is incorporated herein by reference.

BRIEF DESCRIPTION OF THE DRAWINGS

These and other aspects of the invention will be apparent from and elucidated further with reference to the embodiments described by way of example in the following description and with reference to the accompanying drawings, in which

Figure 1 shows a system for processing three dimensional (3D) image data,
Figure 2 shows screen size compensation,
Figure 3 shows border effects for screen size compensation,
Figure 4 shows source offset data in a control message,
Figure 5 shows part of a playlist providing source offset data, and
Figure 6 shows compensation of viewing distance.

The figures are purely diagrammatic and not drawn to scale. In the Figures, elements which correspond to elements already described have the same reference numerals.

DETAILED DESCRIPTION OF EMBODIMENTS

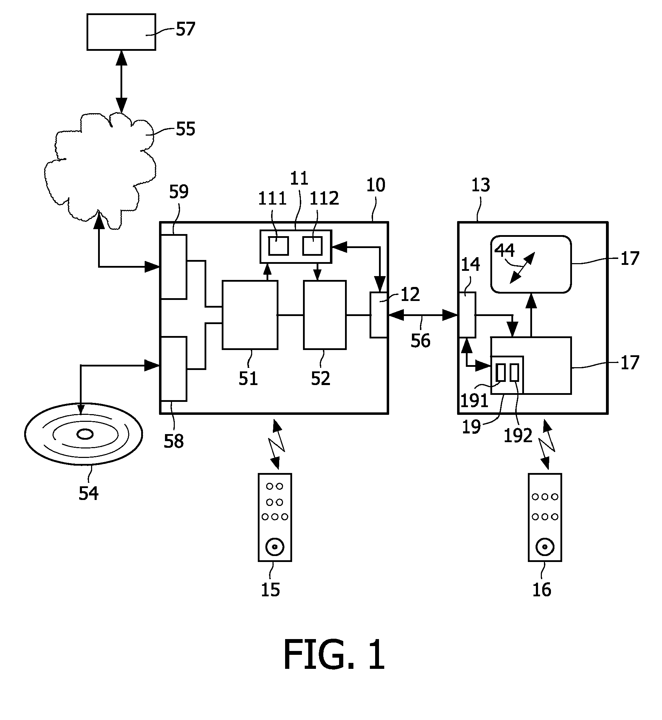

Figure 1 shows a system for processing three dimensional (3D) image data, such as video, graphics or other visual information. A 3D image device 10 is coupled to a 3D display device 13 for transferring a 3D display signal 56.

The 3D image device has an input unit 51 for receiving image information. For example the input unit may include an optical disc unit 58 for retrieving various types of image information from an optical record carrier 54 like a DVD or Blu-Ray disc. In an embodiment the input unit may include a network interface unit 59 for coupling to a network 55, for example the internet or a broadcast network, such device usually being called a set-top box. Image data may be retrieved from a remote media server 57. The 3D image device may also be a satellite receiver, or a media server directly providing the display signals, i.e. any suitable device that outputs a 3D display signal to be directly coupled to a display unit.

The 3D image device has an image processor 52 coupled to the input unit 51 for processing the image information for generating a 3D display signal 56 to be transferred via an image interface unit 12 to the display device. The processor 52 is arranged for generating the image data included in the 3D display signal 56 for display on the display device 13. The image device is provided with user control elements 15, for controlling display parameters of the image data, such as contrast or color parameter.

The 3D image device has a metadata unit 11 for providing metadata. The unit has a display metadata unit 112 for providing 3D display metadata defining spatial display parameters of the 3D display.

In an embodiment the metadata unit may include a viewer metadata unit 111 for providing viewer metadata defining spatial viewing parameters of the viewer with respect to the 3D display. The viewer metadata may comprise at least one of the following spatial viewer parameters: an inter-pupil distance of the viewer, also called eye distance; a viewing distance of the viewer to the 3D display.

The 3D display metadata comprises target width data indicative of a target width $W_t$ of the 3D display in the target spatial viewing configuration. The target width $W_t$ is the effective width of the viewing area, which usually is equal to the screen width. The viewing area may also be selected differently, e.g. a 3D display window as part of the screen while keeping a further area of the screen available for displaying other images like subtitles or menus. The window may be a scaled version of the 3D image data, e.g. a picture in picture. Also a window may be used by an interactive application, like a game or a Java application. The application may retrieve the source offset data and adapt the 3D data in the window and /or in the surrounding area (menu's etc) accordingly. The target spatial viewing configuration includes or assumes a target eye distance $E_t$ of a target viewer. The target eye distance may assumed to be a standard average eye distance (e.g. 65 mm), an actual viewer eye distance as entered or measured, or a selected eye distance as set by the viewer. For example, the viewer may set a child mode having a smaller eye distance when children are among the viewers.

The above mentioned parameters define the geometric arrangement of the 3D display and the viewer. The source 3D image data comprises at least a left image L to be rendered for the left eye and a right image R to be rendered for the right eye. The processor 52 is constructed for processing source 3D image data arranged for a source spatial viewing configuration to generate a 3D display signal 56 for display on the 3D display 17 in a target spatial viewing configuration. The processing is based on a target spatial configuration in dependence of the 3D display metadata, which metadata is available from the metadata unit 11.

The source 3D image data is converted to the target 3D display data based on differences between the source spatial viewing configuration and the target spatial viewing configuration as follows. Thereto the source system provides source offset data $O_s$ indicative of a disparity between the L image and the R image. For example $O_S$ may indicate the disparity at a display width $W_s$ of the 3D image data when displayed in the source spatial viewing configuration based on a source eye distance $E_s$ of a viewer. It is noted that the source system provides the 3D image data for a source spatial viewing configuration, i.e. a reference configuration for which the image data is authored and is intended to be used for display, e.g. a movie theatre.

The input unit 51 is arranged for retrieving the source offset data. The source offset data may be included in and retrieved from the source 3D image data signal. Otherwise the source offset data may be separately transferred, e.g. via the internet or to be entered manually.

The processor 52 is arranged for processing the 3D image data to generate a 3D display signal (56) for the 3D display by changing the mutual horizontal position of images L and R by an offset O to compensate differences between the source spatial viewing configuration and the target spatial viewing configuration, and determining the offset O in dependence of the source offset data. The offset is applied to modify the mutual horizontal position of the images L and R by the offset O. Usually both images are shifted by 50% of the offset, but alternatively only one image may be shifted (by the full offset); or a different spread may be used.

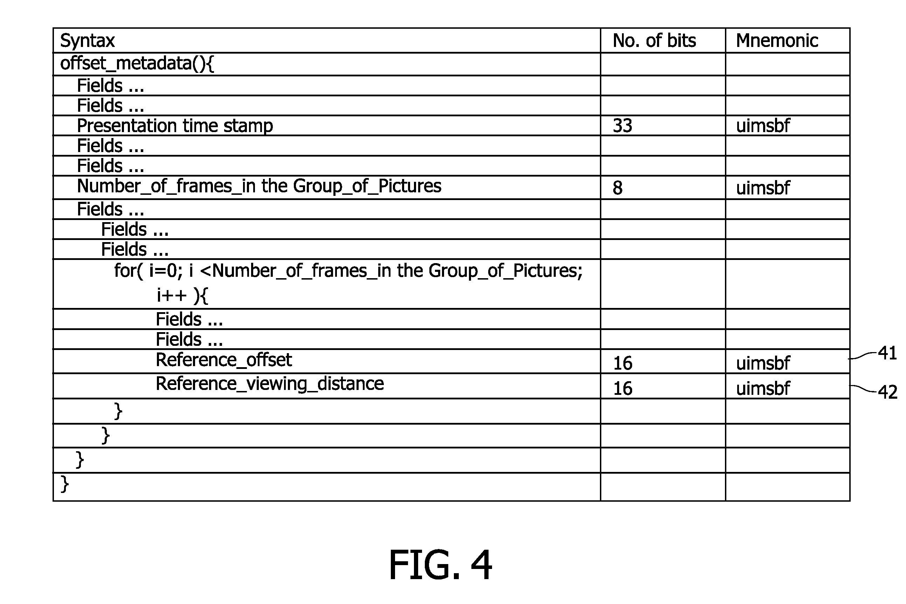

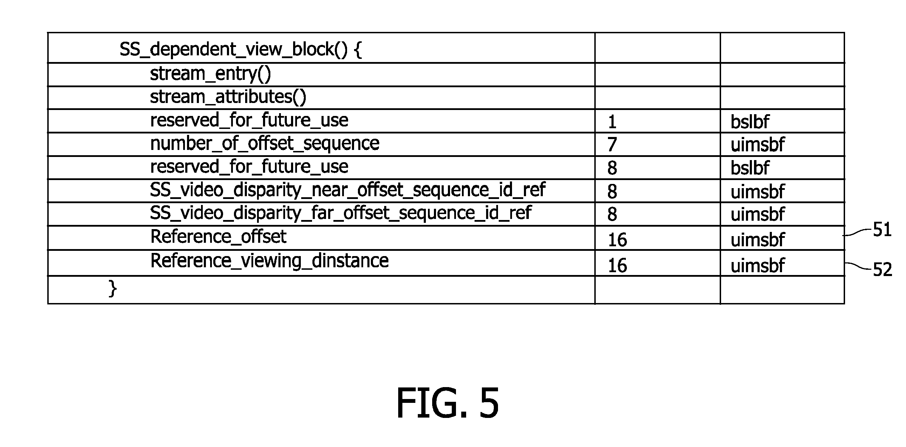

In an embodiment the source offset data comprises border offset data indicative of a spread of the offset O over the position of left image L and the position of right image R. The processor is arranged for determining the spread based on the border offset data, i.e. a part of the total offset applied to the left image and the remaining part of the offset applied to the right image. The border offset may be a parameter in the 3D image signal, e.g. a further element in the table shown in Figure 4 or Figure 5. The border offset may be a percentage, or just a few status bits indicating left shift only, right shift only or 50% to both. Applying the spread as included in the 3D image data is particularly relevant if shifted pixels are to be cropped at the borders as described below.

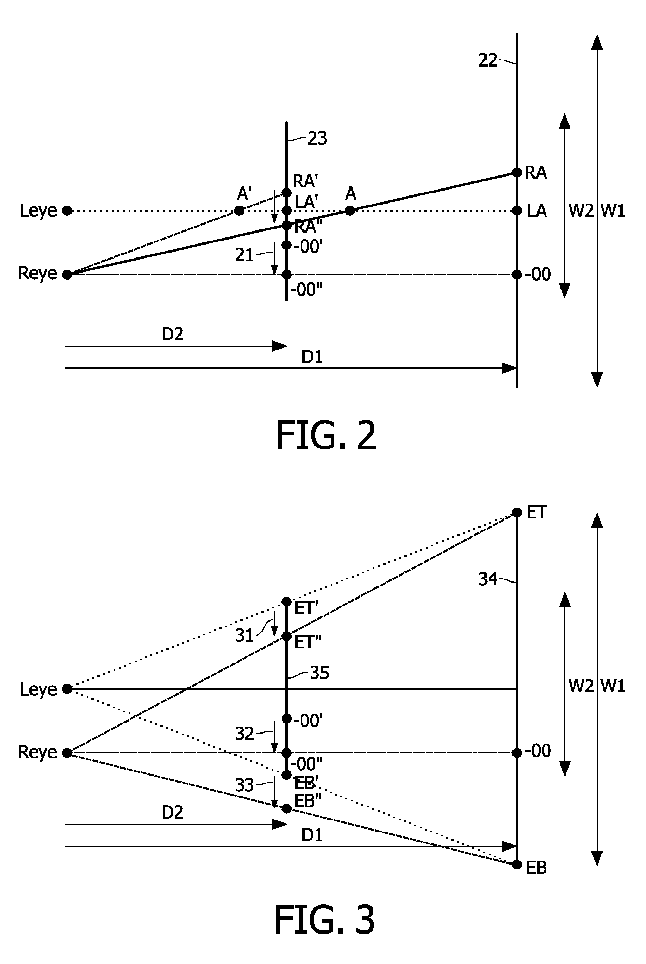

It is noted that the functions for determining and applying the offset are described in detail below. By calculating and applying the offset the processor adapts the display signal to a target spatial viewing configuration, e.g. a home TV set. The source data is adapted to the target width data indicative of a target width $W_t$ of the 3D display in the target spatial viewing configuration having a target eye distance $E_t$ of a target viewer. The effect is further explained with reference to Figures 2 and 3 below.

Both source eye distance $E_s$ and target eye distance $E_t$ may be equal, fixed to a standard value, or may be different. Generally, for accommodating the difference in screen size the offset is calculated by the ratio of the target width and the source width multiplied by the source eye distance deducted from the target eye distance.

The target spatial viewing configuration defines the setup of the actual screen in the actual viewing space, which screen has a physical size and further 3D display parameters. The viewing configuration may further include the position and arrangement of the actual viewer audience, e.g. the distance of the display screen to the viewer's eyes. It is noted that in the current approach a viewer is discussed for the case that only a single viewer is present. Obviously, multiple viewers may also be present, and the calculations of spatial viewing configuration and 3D image processing can be adapted to accommodate the best possible 3D experience for said multitude, e.g. using average values, optimal values for a specific viewing area or type of viewer, etc.

The 3D display device 13 is for displaying 3D image data. The device has a display interface unit 14 for receiving the 3D display signal 56 including the 3D image data transferred from the 3D image device 10. The display device is provided with further user control elements 16, for setting display parameters of the display, such as contrast, color or depth parameters. The transferred image data is processed in image processing unit 18 according to the setting commands from the user control elements and generating display control signals for rendering the 3D image data on the 3D display based on the 3D image data. The device has a 3D display 17 receiving the display control signals for displaying the processed image data, for example a dual or lenticular LCD. The display device 13 may be any type of stereoscopic display, also called 3D display, and has a display depth range indicated by arrow 44.

In an embodiment the 3D image device has a metadata unit 19 for providing metadata. The metadata unit has a display metadata unit 192 for providing 3D display metadata defining spatial display parameters of the 3D display. It may further include a viewer metadata unit 191 for providing viewer metadata defining spatial viewing parameters of the viewer with respect to the 3D display.

In an embodiment providing the viewer metadata is performed in the 3D image device, e.g. by setting the respective spatial display or viewing parameters via the user interface 15. Alternatively, providing the display and/or viewer metadata may be performed in the 3D display device, e.g. by setting the respective parameters via the user interface 16. Furthermore, said processing of the 3D data to adapt the source spatial viewing configuration to the target spatial viewing configuration may be performed in either one of said devices.

In an embodiment the 3D image processing unit 18 in the display device is arranged for the function of processing source 3D image data arranged for a source spatial viewing configuration to generate target 3D display data for display on the 3D display in a target spatial viewing configuration. The processing is functionally equal to the processing as described for the processor 52 in the 3D image device 10.

Hence in various arrangements of the system providing said metadata and processing the 3D image data is provided in either the image device or the 3D display device. Also, both devices may be combined to a single multi function device. Therefore, in embodiments of both devices in said various system arrangements the image interface unit 12 and/or the display interface unit 14 may be arranged to send and/or receive said viewer metadata. Also display metadata may be transferred via the interface 14 from the 3D display device to the interface 12 of the 3D image device. It is noted that the source offset data, for example the value $O_{sp}$, may be included by the 3D image device in the 3D display signal for processing in the 3D display device, e.g. in the HDMI signal.

The 3D display signal may be transferred over a suitable high speed digital video interface such as the well known HDMI interface (e.g. see "High Definition Multimedia Interface Specification Version 1.3a of Nov 10 2006), extended to define the offset metadata as defined below and/or the display metadata.

Figure 1 further shows the record carrier 54 as a carrier of the 3D image data. The record carrier is disc-shaped and has a track and a central hole. The track, constituted by a series of physically detectable marks, is arranged in accordance with a spiral or concentric pattern of turns constituting substantially parallel tracks on an information layer. The record carrier may be optically readable, called an optical disc, e.g. a CD, DVD or BD (Blu-ray Disc). The information is represented on the information layer by the optically detectable marks along the track, e.g. pits and lands. The track structure also comprises position information, e.g. headers and addresses, for indication the location of units of information, usually called information blocks. The record carrier 54 has physical marks embodying a 3D image signal representing the digitally encoded 3D image data for display on a 3D display for a viewer. The record carrier may be manufactured by a method of first providing a master disc and subsequently multiplying products by pressing and/or molding for providing the pattern of physical marks.

The following section provides an overview of 3D perception of depth by humans. 3D displays differ from 2D displays in the sense that they can provide a more vivid perception of depth. This is achieved because they provide more depth cues than 2D displays which can only show monocular depth cues and cues based on motion.

Monocular (or static or 2D) depth cues can be obtained from a static image using a single eye. Painters often use monocular cues to create a sense of depth in their paintings. These cues include relative size, height relative to the horizon, occlusion, perspective, texture gradients, and lighting/shadows.

Binocular disparity is a depth cue which is derived from the fact that both our eyes see a slightly different image. To re-create binocular disparity in a display requires that the display can segment the view for the left - and right eye such that each sees a slightly different image on the display. Displays that can re-create binocular disparity are special displays which we will refer to as 3D or stereoscopic displays. The 3D displays are able to display images along a depth dimension actually perceived by the human eyes, called a 3D display having display depth range in this document. Hence 3D displays provide a different view to the left- and right eye, called L image and R image.

3D displays which can provide two different views have been around for a long time. Most of these are based on using glasses to separate the left- and right eye view. Now with the advancement of display technology new displays have entered the market which can provide a stereo view without using glasses. These displays are called auto-stereoscopic displays.

Figure 2 shows screen size compensation. The Figure shows in top view a source spatial viewing configuration having a screen 22 having a source width $W_s$ indicated by arrow W1. A source distance to the viewer is indicated by arrow D1. The source spatial viewing configuration is the reference configuration for which the source material has been authored, e.g. a movie theatre. The eyes of the viewer (Left eye = Leye, Right eye = Reye) have been schematically indicated and are assumed to have a source eye distance $E_s$.

The Figure also shows a target spatial viewing configuration having a screen 23 having a source width $W_t$ indicated by arrow W2. A target distance to the viewer is indicated by arrow D2. The target spatial viewing configuration is the actual configuration in which the 3D image data is displayed, e.g. a home theatre. The eyes of the viewer have been schematically indicated and are assumed to have a target eye distance $E_t$. In the Figure source and target eyes coincide and $E_s$ equals $E_t$. Also the viewing distance has been chosen in proportion to the ratio of the screen widths (hence W1/D1=W2/D2). In the Figure a virtual object A is seen on screen W1 at RA by Reye, and at LA by Leye. When the original image data is displayed on screen W2 without any compensation, RA becomes RA' on a scaled position on W2, and similarly LA -> LA'. Hence, without compensation, on screen W2 the object A is perceived at A' (so the depth position looks different on both screens). Moreover, -oo (far infinity) becomes -oo', which is no longer is at real -oo.

The following compensation is applied to correct for the above differences in depth perception. The pixels on W2 are to be shifted with an offset 21. In an embodiment of the device the processor is arranged for said converting based the target eye distance $E_t$ being equal to the source eye distance $E_s$.

In an embodiment of device the processor is arranged for said compensating based on the source offset data comprising a source offset parameter indicative of the ratio $E_s / W_s$. The single parameter value for the ratio of the source eye distance $E_s$ and the source width $W_s$ allows the offset to be calculated by determining an offset value for an object at infinity in the target configuration by $E_t / W_t$ and subtracting the source offset value. The calculation might be performed in the physical size (e.g in meters or inches) and subsequently be converted into pixels, or directly in pixels. The source offset data is a source offset distance value $O_{sd}$ based on

$$O_{sd} = E_s / W_s$$

The processor 52 is arranged for determining the offset for a target eye distance $E_t$ of a target viewer and the target width $W_t$ based on

$$O = E_t / W_t - O_{sd} \ ;$$

The actual display signal is usually expressed in pixels, i.e. a target horizontal pixel resolution of $HP_t$. A source offset pixel value $O_sp$ for the 3D image data having a source horizontal resolution in pixels $HP_s$ is based on

$$O_{sp} = HP_s * E_s / W_s$$

8

The formula for the offset Op in pixels then is:

$$O_p = O * HP_t / W_t = HP_t * E_t / W_t - O_{sp} \;\;.$$

As the first part of the formula is fixed for a specific display, it may be calculated only once by

$$O_{tp} = HP_t * E_t / W_t$$

Thereby the calculated offset for a 3D image signal having said source offset value only is a subtraction

$$O_p = O_{tp} - O_{sp}$$

In an example practical values are eye distance = 0.065m, W2 = 1m, W1 = 2m, HP = 1920, which results in offset $O_sp$ = 62.4 pixels and Op = 62.4 pixels.

From the Figure it follows that the uncorrected depth position A' is now compensated, because for Reye RA' becomes RA" and object A is seen on screen W2 again at same depth as on screen W1. Also the position -oo' becomes -oo", which is now again is at real -oo.

Surprisingly the compensated depth is correct for all objects, in other words, due to offset correction all objects appear at same depth and therefore the depth impression in the target spatial viewing configuration is the same as in the source spatial viewing configuration (for example as the director on big screen intended).

For calculating the offset the original offset of the source must be known, e.g. as the source offset data $O_s$ provided with the 3D image data signal as stored on a record carrier or distributed via a network. The target screen size $W_t$ must also be known as display metadata. The display metadata may be derived from a HDMI signal as described above, or may be entered by a user.

The player should apply the calculated offset (based on $O_s$ and $W_t$). It can be seen that with applying the specific offset, the object A is seen at exactly the same place as in the theater. This is now true for all objects, therefore the viewing experience is exactly the same at home. Hence differences between the actual screen size and the source sonfiguration are corrected.

In an embodiment the device (player and/or display) may further allow the viewer to set a different offset. For example, the device may allow the user to set a preference to scale the offset, e.g. to 75% of the nominal offset.

In an embodiment of device the device comprises viewer metadata means for providing viewer metadata defining spatial viewing parameters of the viewer with respect to the 3D display, the spatial viewing parameters including the target eye distance $E_t$. The actual viewer eye distance is to be used for calculating the offset. The viewer may actually enter his eye distance, or a measurement may be performed, or a viewer category may be set, e.g. a child mode or an age. The category is converted by the device for setting different target eye distance, e.g. a smaller eye distance for children than for adults.

Figure 3 shows border effects for screen size compensation. The Figure is a top view similar to Figure 2 and shows a source spatial viewing configuration having a screen 34 having a source width $W_s$ indicated by arrow W1. A source distance to the viewer is indicated by arrow D1. The Figure also shows a target spatial viewing configuration having a screen 35 having a source width $W_t$ indicated by arrow W2. A target distance to the viewer is indicated by arrow D2. In the Figure source and target eyes coincide and $E_s$ equals $E_t$. Also the viewing distance has been chosen in proportion to the ratio of the screen widths (hence W1/D1=W2/D2). An offset, indicated by arrows 31,32,33 is applied to compensate for the screen size difference as elucidated above

In the Figure a virtual object ET is at the leftmost border of the screen W1 and assumed to be at the depth of screen W1 34. The object is shown as ET' in the L image, and also in the uncorrected R image. After applying offset 31 to the R image the object is shown at ET". The viewer will perceive the object again at the original depth. Also the position -oo' becomes -oo", so objects are now again at real -oo.

However, at the rightmost border of the screen W2 a problem occurs, because an object EB' on screen W2 cannot be shifted to EB" because the screen W2 ends at EB'. Hence at the borders measures are needed, i.e. at both borders if the L image and the R image are both shifted according to the offset (usually 50% of the offset to each image, but dividing the total offset differently is also possible). Several options are explained now. The device accommodates one of said processing options to modify the 3D display signal after applying the offset.

In an embodiment of device the processor is arranged for accommodating said mutually changed horizontal positions by applying to the 3D display signal intended for a display area at least one of the following

- cropping image data exceeding the display area due to said changing;
- adding pixels to the left and/or right boundary of the 3D display signal for extending the display area;
- scaling the mutually changed L and R images to fit within the display area.

A first processing option is cropping any pixels exceeding the current number of pixels in horizontal direction. Cropping keeps the signal within the standard display signal resolution. In the Figure this means that the part left of ET" has to be cropped, e.g. filled with black pixels. At the right border EB as seen by the right eye is mapped to EB' without correction, and after the offset correction it will become EB". However the pixels to the right of EB' cannot be displayed and are discarded.

In an embodiment the horizontal resolution is slightly enlarged with respect to the original resolution. For example, the horizontal resolution of the 3D image data is 1920 pixels, and the resolution in the display signal is set at 2048 pixels. Adding pixels exceeding the current number of pixels in horizontal direction extends the standard display signal resolution but avoids missing some pixels for one eye at the left and right edges of the display area.

It is noted that the maximum physical offset is always less than the eye distance. When the reference screen W1 is very large (e.g. 20 m for a large theatre) and the user screen is very small (e.g. 0,2 m for a small laptop) the offset as determined by the offset formula above is about 99% of the eye distance. The extension in pixels for such a small screen would be about 0,065 / 0,2 * 1920 = 624 pixels, and the total would then be 1920+624 = 2544 pixels. The total resolution may be set to 2560 pixels (a common value for high resolution display signals) which accommodates offsets for very small screens. For a screen of 0,4m width the maximum extension would be 0,065 / 0,4 * 1920 = 312 pixels. Hence to be able to display such a signal the screen horizontal size has to be enlarged (with value corresponding to the 'maximum offset'). It is noted that the actual screen size of the 3D display may be selected in accordance with the maximum offset that is to be expected for the physical size of the screen, i.e. extending the physical screen width by about the eye distance.

Alternatively or additionally, the L and R images may be scaled down to map the total number of pixels (including any pixels exceeding the original number of pixels in horizontal direction) on the available horizontal resolution. Hence the display signal is fitted within the standard display signal resolution. In the practical example above for the 0,2 m screen the extended resolution of 2544 would be scaled down to 1920. Scaling might be applied only in horizontal direction (resulting in a slight deformation of the original aspect ratio), or also to the vertical direction, resolution in some black bar area on top and/or at the bottom of the screen. The scaling avoids missing pixels for one eye at the left and right edges of the display area. The scaling might be applied by the source device before generating the display signal, or in a 3D display device that is receiving the 3D display signal already having the offset applied and having the extended horizontal resolution as described above. Scaling the images to map any pixels exceeding the current number of pixels in horizontal direction on the available horizontal line keeps the signal within the standard display signal resolution and avoids missing some pixels for one eye at the left and right edges of the display area.

The above alternative options can be combined and/or partly applied. For example applying substantial scaling in horizontal direction is often not preferred by content owners and/or viewers. Scaling may be limited and combined with some cropping in the amount of offset pixels after the scaling. Also the shifting can be done symmetrical or asymmetrical. There could be a flag or parameter included in the 3D image signal to give the author control over how to crop and/or shift (e.g. a scale from -50 to +50, 0 means symmetrical, -50 all cropping on left side, +50 all cropping on right side). The shift parameter is to be multiplied by the calculated offset to determine the actual shift.

The 3D image signal basically includes source 3D image data representing at least a left image L to be rendered for the left eye and a right image R to be rendered for the right eye. Additionally the 3D image signal includes the source offset data. It is noted that the signal may be embodied by a physical pattern of marks provided on a storage medium like an optical record carrier 54 as shown in Figure 1. The source offset data is directly coupled to the source 3D image data according to the format of the 3D image signal. The format may be an extension to a known storage format like the Blu-ray Disc (BD). Various options for including the source offset data and/or offset data are described now.

Figure 4 shows source offset data in a control message. The control message may be a sign message included in a 3D image signal for informing the decoder how to process the signal, e.g. as a part of the MVC dependent elementary video stream in an extended BD format. The sign message is formatted like the SEI message as defined in MPEG systems. The table shows the syntax of offset metadata for a specific instant in the video data.

In the 3D image signal the source offset data at least includes the reference offset 41, which indicates the source offset at a source eye distance $E_s$ on the source screen size (W1 in Figure 2). A further parameter may be included: reference distance 42 of a viewer to the screen in the source spatial viewing configuration (D1 in Figure 2). In the example the source offset data is stored in the video and graphics offset metadata or in the PlayList in the STN_ table for stereoscopic video. A further option is to actually include offset metadata that indicates the amount of shift in pixels of the left and the right view for a particular target screen width. As explained above this shift will create different angular disparities to compensate for different display sizes.

It is noted that other offset metadata may be stored in the Sign Messages in the dependent coded video stream. Typically the dependent stream is the stream carrying the video for the "R" view. The Blu-ray Disc specification mandates that these Sign Messages must be included in the stream and processed by the player. Figure 4 shows how the structure of the metadata information together with the reference offset 41 is carried in the Sign Messages. The reference offset is included for each frame; alternatively the source offset data may be provided for a larger fragment, e.g. for a group of pictures, for a shot, for the entire video program, via a playlist, etc.

In an embodiment the source offset data also includes a reference viewing distance 42 as shown in Figure 4. The reference viewing distance can be used to verify if the actual target viewing distance is proportionally correct as explained above. Also, the reference viewing distance can be used to adapt the target offset as explained below.

Figure 5 shows part of a playlist providing source offset data. The table is included in the 3D image signal and shows a definition of a stream in a stereoscopic view table. To reduce the amount of source offset data the Reference Offset 51 (and optionally a Reference_viewing_distance 52) are now stored in the PlayList of the BD specification. These values may be consistent for the whole movie and do not need to be signaled on a frame basis. A PlayList is a list indicating a sequence of playitems that together make up the presentation, a playitem has a start and end time and lists which streams should be played back during the duration of the PlayItem. For playback of 3D stereoscopic video such a table is called the STN_table_for_Stereoscopic. The table provides a list of stream identifiers to identify the streams that should be decoded and presented during the playItem. The entry for the dependent video stream (called SS_dependent_view_block) that contains the Right-eye view includes the screen size and viewing distance parameters as is shown in Figure 5.

It is noted that the reference viewing distance 42,52 is an optional parameter to confer the setup of the source spatial viewing configuration to the actual viewer. The device might be arranged for calculating the optimum target viewing distance $D_t$ based on the ratio of the reference screen size and the target screen size:

$$D_t = D_{ref} * W_t / W_s$$

The target viewing distance may be shown to the viewer, e.g. displayed via the graphical user interface. In an embodiment the viewer system is arranged for measuring the actual viewing distance, and indicating to the viewer the optimum distance, e.g. by a green indicator when the viewer is at the correct target viewing distance, and different colors when the viewer is too close or too far away.

In an embodiment of the 3D image signal the source offset data comprises at least a first target offset value $O_{t1}$ for a corresponding first target width $W_{t1}$ of a target 3D display for enabling said changing the mutual horizontal position of images L and R based on the offset $O_{t1}$ in dependence of the ratio of the target width $W_t$ and the first target width $W_{t1}$. Based on a correspondence of the first target width $W_{t1}$ and the actual target width $W_t$ on the actual display screen the receiving device might directly apply the target offset value as provided. Also a few values for different target widths may be included in the signal. Further an interpolation or extrapolation may be applied for compensating differences between the supplied target width(s) and the actual target width. It is noted that linear interpolation correctly provides intermediate values.

It is noted that a table of a few values for different target widths also allows the content creator to control the actual offset applied, e.g. to add a further correction to the offset based on the preference of the creator for the 3D effect at the respective target screen sizes.

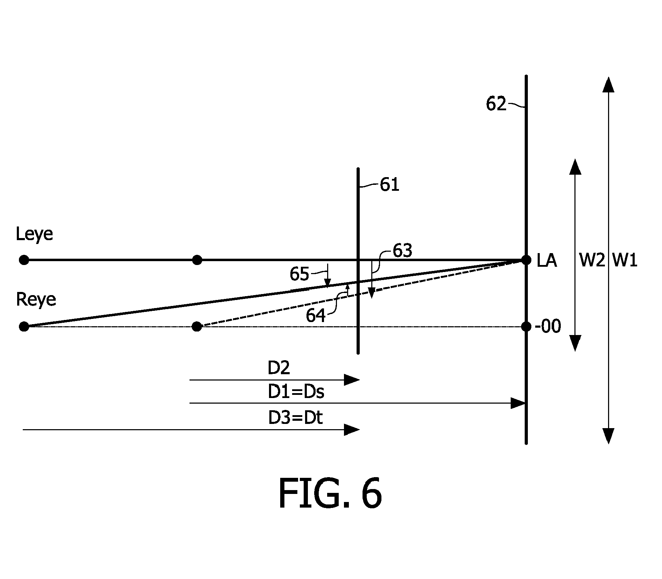

Figure 6 shows compensation of viewing distance. The Figure is a top view similar to Figure 2 and shows a source spatial viewing configuration having a screen 62 having a source width $W_s$ indicated by arrow W1. A source distance $D_s$ to the viewer is indicated by arrow D1. The Figure also shows a target spatial viewing configuration having a screen 61 having a source width $W_t$ indicated by arrow W2. A target distance $D_t$ to the viewer is indicated by arrow D3. In the Figure source and target eyes coincide and $E_s$ equals $E_t$. A optimum viewing distance D2 has been chosen in proportion to the ratio of the screen widths (hence W1/D1=W2/D2). A corresponding optimum offset, indicated by arrow 63 would be applied without viewing distance compensation to compensate for the screen size difference as elucidated above.

However, the actual viewing distance D3 deviates from the optimum distance D2. In practice the viewer distance at home may not match D2/D1=W2/W1, typically he will be further away. Hence the offset correction as mentioned above will not be able to make the view experience exactly the same as on the big screen. We now assume that the viewer is at D3>D2. The source viewer will see an object in front of the source screen 62, which object will move closer to viewer when viewed closer to the big screen. However, when the nominal offset correction has been applied and when viewed at D3, the object displayed on the small screen will appear further from the viewer than intended.

An object, which is positioned at big screen depth, becomes an object behind the big screen depth when viewed at D3 on small (offset compensated) screen. It is proposed to compensate the wrong positioning with an offset compensated for viewing distance $O_{cv}$ indicated by arrow 63 in such a way, that the object still appears at its intended depth when viewed on the source screen (i.e. the big screen depth). For example the cinema is the source configuration, and home is the target configuration. The compensation of the offset to adapt to the difference in viewing distance is indicated by arrow 64, and calculated as follows. The compensated offset $O_{cv}$ for a target viewing distance $D_t$ of the viewer to the 3D display, and the source spatial viewing configuration having a source viewing distance $D_s$, is determined based on

$$O_{cv} = O / (1 + D_t / D_s - W_t / W_s ) .$$

Alternatively, based on a resolution $HP_t$ in pixels and screen sizes, the formula is

$$O_{cv(pix)} = E * (1 - W_t / W_s ) * D_s / ( D_t + D_s - W_t / W_s * D_s )/ W_t * HP_t$$

The compensated offset is determined for the target spatial viewing configuration where the ratio of viewing distance $D_t$ and the source viewing distance $D_s$ does not match proportionally with the screen size ratio $W_t / W_s$.

It is noted that the relation between disparity and depth is non-linear, however a limited range (depths around the big screen) can approximated linearly. So, if the objects are not too far in depth from the big screen, they will appear 'undistorted' when viewed at D3 on the small screen when applying the viewing distance compensated offset.

When the objects are relatively further from the big screen there will be some distortion, however due to the compensated offset this is generally kept to a minimum. The assumption is that the director will usually see to it, that most objects are (roughly symmetrically distributed) around the big screen. So in most cases the distortion will be minimal. It is noted that, when the viewer is farther from the screen than intended, the objects still are too small, while the depth is at least partly compensated. The compensation achieves a middle way between maximum depth correction and 2D size as perceived.

It is noted that the source screen width may be calculated by $W_s = E_s / O_s$. The screen size ratio may be replaced by the ratio of the source offset $O_s$ and the target offset O (assuming the same eye distance) which results in

$$O_{cv} = O / (1 + D_t / D_s - O_s / O ) .$$

In an embodiment, a table of offset values and viewing distances may be included in the 3D image signal. Now, if for some camera shots said distortion is not minimal, the content author could modify the compensated offset via the table containing the offset info for various home screen sizes and distances. Such tables could be included in the 3D image signal at each new frame or group of pictures, or at a new camera shot, where the center of gravity for object distances is different the big screen distance. Via said repetitive tables the offset may be modified at a speed that is comfortable for the human viewer.

It is to be noted that the invention may be implemented in hardware and/or software, using programmable components. A method for implementing the invention has the following steps. A first step is providing 3D display metadata defining spatial display parameters of the 3D display. A further step is processing source 3D image data arranged for a source spatial viewing configuration to generate a 3D display signal for display on the 3D display in a target spatial viewing configuration. As described above the 3D display metadata comprises target width data indicative of a target width $W_t$ of the 3D display in the target spatial viewing configuration having a target eye distance $E_t$ of a target viewer. The method further includes the steps of providing and applying the source offset data as described above for the device.

Although the invention has been mainly explained by embodiments using the Blu-Ray Disc, the invention is also suitable for any 3D signal, transfer or storage format, e.g. formatted for distribution via the internet. Furthermore, the source offset data may be either included in the 3D image signal, or may be provided separately. Source offset data may be provided in various ways, e.g. in meters, inches, and/or pixels for a predefined total screen size. The invention can be implemented in any suitable form including hardware, software, firmware or any combination of these. The invention may optionally be implemented as a method, e.g. in an authoring or displaying setup, or at least partly as computer software running on one or more data processors and/or digital signal processors.

It will be appreciated that the above description for clarity has described embodiments of the invention with reference to different functional units and processors. However, the invention is not limited to the embodiments, and lies in each and every novel feature or combination of features described. Any suitable distribution of functionality between different functional units or processors may be used. For example, functionality illustrated to be performed by separate units, processors or controllers may be performed by the same processor or controllers. Hence, references to specific functional units are only to be seen as references to suitable means for providing the described functionality rather than indicative of a strict logical or physical structure or organization.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way. The word 'comprising' does not exclude the presence of other elements or steps than those listed.

**Claims**

1. Device for processing of three dimensional [3D] image data for display on a 3D display for a viewer in a target spatial viewing configuration, the 3D image data representing at least a left image L to be rendered for the left eye and a right image R to be rendered for the right eye in a source spatial viewing configuration,

   the device comprising

   - a processor (52,18) for processing the 3D image data to generate a 3D display signal (56) for the 3D display by changing the mutual horizontal position of images L and R by an offset O to compensate differences between the source spatial viewing configuration and the target spatial viewing configuration, and
   - display metadata means (112,192) for providing 3D display metadata comprising target data indicative of a target width $W_t$ of the 3D data as displayed in the target spatial viewing configuration,
   - input means (51) for retrieving source offset data indicative of a disparity between the L image and the R image provided for the 3D image data based on a source width $W_s$ and a source eye distance $E_s$ of a viewer in the source spatial viewing configuration,

   the processor (52) being further arranged for

   - determining the offset O in dependence of the source offset data.

2. Device as claimed in claim 1, wherein the input means are arranged for retrieving source offset data comprising at least one of

   - at least a first target offset value $O_{t1}$ for a first target width $W_{t1}$ of a target 3D display ;
   - a source offset distance ratio value $O_{sd}$ based on

   $$O_{sd} = E_s / W_s \; ;$$

   - a source offset pixel value $O_{sp}$ for the 3D image data having a source horizontal resolution in pixels $HP_s$ based on

   $$O_{sp} = HP_s * E_s / W_s \; ;$$

   - source viewing distance data (42) indicative of a reference distance of a viewer to the display in the source spatial viewing configuration;
   - border offset data indicative of a spread of the offset O over the position of left image L and the position of right image R;
and the processor (52) is arranged for determining the offset O in dependence on the respective source offset data.

3. Device as claimed in claim 2, wherein the processor (52) is arranged for at least one of

- determining the offset O in dependence on a correspondence of the first target width $W_{t1}$ and the target width $W_t$ ;
- determining the offset as a target distance ratio $O_{td}$ for a target eye distance $E_t$ of a target viewer and the target width $W_t$ based on

$$O_{td} = E_t / W_t - O_{sd} \; ;$$

- determining the offset in pixels Op for a target eye distance $E_t$ of a target viewer and the target width $W_t$ for the 3D display signal having a target horizontal resolution in pixels $HP_t$ based on

$$O_p = HP_t * E_t / W_t - O_{sp} \; ;$$

- determining the offset O in dependence of a combination of the source viewing distance data and at least one of the first target offset value, the source offset distance value, and the source offset pixel value;
- determining a spread of the offset O over the position of left image L and the position of right image R in dependence of the border offset data.

4. Device as claimed in claim 1, wherein the source offset data comprises, for a first target width $W_{t1}$, at least a first target offset value $O_{t1}$ for a first viewing distance and at least a second target offset value $O_{t112}$ for a second viewing distance, and the processor (52) is arranged for determining the offset O in dependence on a correspondence of the first target width $W_{t1}$ and the target width $W_t$ and a correspondence of an actual viewing distance and the first or second viewing distance.

5. Device as claimed in claim 1 or 2, wherein the device comprises viewer metadata means (111,191) for providing viewer metadata defining spatial viewing parameters of the viewer with respect to the 3D display, the spatial viewing parameters including at least one of

- a target eye distance Et ;
- a target viewing distance $D_t$ of the viewer to the 3D display;
and the processor is arranged for determining the offset in dependence of at least one of the target eye distance $E_t$ and the target viewing distance $D_t$ .

6. Device as claimed in claim 1, wherein the processor (52) is arranged for determining a offset $O_{cv}$ compensated for a target viewing distance $D_t$ of the viewer to the 3D display, the source spatial viewing configuration having a source viewing distance $D_s$, based on

$$O_{cv} = O / (1 + D_t / D_s - W_t / W_s) \; .$$

7. Device as claimed in claim 1, wherein the source 3D image data comprises the source offset data and the processor (52) is arranged for retrieving the source offset data from the source 3D image data.

8. Device as claimed in claim 1, wherein the device comprises input means (51) for retrieving the source 3D image data from a record carrier.

9. Device as claimed in claim 1, wherein the device is a 3D display device and comprises the 3D display (17) for displaying 3D image data.

**10.** Device as claimed in claim 1, wherein the processor (52) is arranged for accommodating said mutually changed horizontal positions by applying to the 3D display signal intended for a display area at least one of the following

- cropping image data exceeding the display area due to said changing;
- adding pixels to the left and/or right boundary of the 3D display signal for extending the display area;
- scaling the mutually changed L and R images to fit within the display area.

**11.** Method of processing of three dimensional [3D] image data for display on a 3D display for a viewer in a target spatial viewing configuration, the 3D image data representing at least a left image L to be rendered for the left eye and a right image R to be rendered for the right eye in a source spatial viewing configuration,
the method comprising the steps of

- processing the 3D image data to generate a 3D display signal for the 3D display by changing the mutual horizontal position of images L and R by an offset O to compensate differences between the source spatial viewing configuration and the target spatial viewing configuration,
- providing 3D display metadata comprising target width data indicative of a target width $W_t$ of the 3D data as displayed in the target spatial viewing configuration, and
- retrieving source offset data indicative of a disparity between the L image and the R image provided for the 3D image data based on a source width $W_s$ and a source eye distance $E_s$ of a viewer in the source spatial viewing configuration, and
- determining the offset O in dependence of the source offset data.

**12.** 3D image signal for transferring three dimensional [3D] image data for display on a 3D display for a viewer in a target spatial viewing configuration, the 3D image signal comprising

- the 3D image data representing at least a left image L to be rendered for the left eye and a right image R to be rendered for the right eye in a source spatial viewing configuration, and
- source offset data (41) indicative of a disparity between the L image and the R image provided for the 3D image data based on a source width $W_s$ and a source eye distance $E_s$ of a viewer in the source spatial viewing configuration for determining an offset O to compensate differences between the source spatial viewing configuration and the target spatial viewing configuration having a target width $W_t$ of the 3D data as displayed by changing the mutual horizontal position of images L and R by the offset O.

**13.** 3D image signal as claimed in claim 12, wherein the source offset data comprises at least one of

- at least a first target offset value $O_{t1}$ for a first target width $W_{t1}$ of a target 3D display ;
- a source offset distance ratio value $O_{sd}$ based on

$$O_{sd} = E_s / W_s \ ;$$

- a source offset pixel value $O_{sp}$ for the 3D image data having a source horizontal resolution in pixels $HP_s$ based on

$$O_{sp} = HP_s * E_s / W_s \ ;$$

- source viewing distance data (42) indicative of a reference distance of a viewer to the display in the source spatial viewing configuration;
- border offset data indicative of a spread of the offset O over the position of left image L and the position of right image R;
for determining the offset O in dependence on the respective source offset data.

**14.** 3D image signal as claimed in claim 12, wherein the signal comprises multiple instances of the source offset data for respective fragments of the 3D image data, the fragments being one of frames; group of pictures; shots; playlists; time periods.

**15.** Record carrier comprising physically detectable marks representing the 3D image signal as claimed in claim 12, 13 or 14.

**16.** Computer program product for processing of three dimensional [3D] image data for display on a 3D display for a viewer, which program is operative to cause a processor to perform the method as claimed in claim 11.

FIG. 1

FIG. 2

FIG. 3

| Syntax | No. of bits | Mnemonic |
|---|---|---|
| offset_metadata(){ | | |
|   Fields ... | | |
|   Fields ... | | |
|   Presentation time stamp | 33 | uimsbf |
|   Fields ... | | |
|   Fields ... | | |
|   Number_of_frames_in the Group_of_Pictures | 8 | uimsbf |
|   Fields ... | | |
|     Fields ... | | |
|     Fields ... | | |
|     for( i=0; i <Number_of_frames_in the Group_of_Pictures; i++ ){ | | |
|       Fields ... | | |
|       Fields ... | | |
|       Reference_offset | 16 | uimsbf |
|       Reference_viewing_distance | 16 | uimsbf |
|     } | | |
|     } | | |
|   } | | |
| } | | |

41

42

# FIG. 4

| | | |
|---|---|---|
| SS_dependent_view_block() { | | |
| stream_entry() | | |
| stream_attributes() | | |
| reserved_for_future_use | 1 | bslbf |
| number_of_offset_sequence | 7 | uimsbf |
| reserved_for_future_use | 8 | bslbf |
| SS_video_disparity_near_offset_sequence_id_ref | 8 | uimsbf |
| SS_video_disparity_far_offset_sequence_id_ref | 8 | uimsbf |
| Reference_offset | 16 | uimsbf |
| Reference_viewing_dinstance | 16 | uimsbf |
| } | | |

51
52

FIG. 5

20

FIG. 6

**EP 2 309 764 A1**

| | Europäisches Patentamt European Patent Office Office européen des brevets | **EUROPEAN SEARCH REPORT** | Application Number EP 09 17 0382 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2004/233275 A1 (TOMITA SEIJIRO [JP])<br>25 November 2004 (2004-11-25)<br>page 2, paragraphs 18-19;<br>page 5, paragraphs 85, 88, 89, 91 figs.<br>1-2;<br>page 6-7, paragraphs 102-112;<br>page 9, paragraph 130-132. | 1-9,<br>12-16<br>10 | INV.<br>H04N13/00 |
| Y | EP 1 089 573 A (SHARP KK [JP])<br>4 April 2001 (2001-04-04)<br>pages 2-3, paragraphs 11-16;<br>page 4, paragaphs 38-39;<br>page 5, paragraphs 48-56;<br>page 7, paragraph 65;<br>page 9, paragraphs 95-103, fig. 7. | 10 | |
| D,A | KUTKA R: "RECONSTRUCTION OF CORRECT 3-D PERCEPTION ON SCRENS VIEWED AT DIFFERENT DISTANCES"<br>IEEE TRANSACTIONS ON COMMUNICATIONS, IEEE SERVICE CENTER, PISCATAWAY, NJ, US,<br>vol. 42, no. 1,<br>1 January 1994 (1994-01-01), pages 29-33,<br>XP000442856<br>ISSN: 0090-6778<br>* page 1, right-hand column, paragraph 2 - page 5, left-hand column, paragraph 4 * | 1-16 | TECHNICAL FIELDS SEARCHED (IPC)<br><br>H04N |
| A | TAM W J ET AL: "PERCEIVED SIZE OF TARGETS DISPLAYED STEREOSCOPICALLY"<br>PROCEEDINGS OF THE SPIE - THE INTERNATIONAL SOCIETY FOR OPTICAL ENGINEERING, SPIE, US,<br>vol. 4297, 22 January 2001 (2001-01-22),<br>pages 334-345, XP008021791<br>ISSN: 0277-786X<br>* page 5, paragraph 1 - page 11, paragraph 4 * | 1-16 | |

The present search report has been drawn up for all claims

| Place of search | Date of completion of the search | Examiner |
|---|---|---|
| Munich | 23 December 2009 | Dinov, Vassil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

22

**ANNEX TO THE EUROPEAN SEARCH REPORT**
**ON EUROPEAN PATENT APPLICATION NO.**                    EP 09 17 0382

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2009

| Patent document cited in search report | Publication date | Patent family member(s) | Publication date |
|---|---|---|---|
| US 2004233275 A1 | 25-11-2004 | AU 2003221143 A1<br>WO 2004084560 A1 | 11-10-2004<br>30-09-2004 |
| EP 1089573 A | 04-04-2001 | GB 2354389 A<br>GB 2354391 A<br>JP 3568195 B2<br>JP 2001148869 A<br>US 6798406 B1 | 21-03-2001<br>21-03-2001<br>22-09-2004<br>29-05-2001<br>28-09-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **R. Kutka.** Reconstruction of Correct 3-D perception on Screens viewed at different distances. *IEEE transactions on Communications,* January 1994, vol. 42 (1

- *High Definition Multimedia Interface Specification,* 10 November 2006